# EUROPEAN PATENT APPLICATION

(11) **EP 1 479 544 A2**
(43) Date of publication of application: **24.11.2004**
(21) Application number: 04012100.6
(22) Date of filing: 21.05.2004
(51) Int. Cl.: B60G 17/015

(54) **Suspension control apparatus of vehicle**

(30) Priority: 23.05.2003 JP 2003146836
(71) Applicant: AISIN AW CO., LTD., Anjo-shi Aichi 444-1192 (JP)
(72) Inventor: Niwa, Toshiaki, Okazaki-shi Aichi 444-8564 (JP); Ogawa, Fumiharu, Okazaki-shi Aichi 444-8564 (JP); Satou, Yuji, Okazaki-shi Aichi 444-8564 (JP)
(74) Representative: Kramer - Barske - Schmidtchen

(57) **Abstract**

Arrival of a vehicle at a particular location is estimated, a suspension control value for the particular location is determined, the wheel suspensions (40) are controlled based on the determined suspension control value, and suspension control is suitably executed before the vehicle arrives at the particular location. The suspension control apparatus (10) includes a position detector (23) for detecting present position of the vehicle, a navigation unit (21) for producing particular location data, suspension units (40), having suspension characteristics capable of control, disposed with each of the wheels, and a control unit which estimates the arrival of the vehicle at the particular location, and controls the suspension units in a manner suitable for the particular point in advance of arrival of the vehicle at that particular point.

## Description

### BACKGROUND OF THE INVENTION

### 1. Field of the Invention

This invention relates to a suspension control apparatus for vehicles.

### 2. Description of the Related Art

Suspension control devices, which are specifically designed for vehicles equipped with navigational systems, control the suspension in accordance with the road condition data offered by the navigation device. In the case of the system disclosed in JP-A-10-272913, the present position of the vehicle is detected, for example, at a service station, at a parking lot or at a particular facility, such as a hospital, and the suspension is controlled so as to maintain the height of the vehicle at a level suited for the facility. When the vehicle has arrived at the service station, parking lot or hospital, therefore, the height of the vehicle is automatically lowered, enabling the passengers to easily get in or out.

According to the above-mentioned conventional suspension control system of JP-A-272913, however, the suspension is adjusted by the controller only after the vehicle has entered the facility, often making it difficult to cope with situations due to delay in the control. At a toll gate, for example, if the height of the vehicle is adjusted so that the height of the driver is nearly the same as that of the personnel at the window of the toll gate, then a ticket or fee can be easily handed over. However, even when the suspension is controlled so as to adjust the height of the vehicle after the vehicle has arrived at the toll gate window, the handing over of payment of the toll may have already started before the adjustment of the vehicle height is completed, and therefore the advantage owing to the adjustment of the vehicle height cannot be fully enjoyed.

Further, for example when a vehicle enters a parking lot of a roadside convenience store or restaurant, with a sidewalk along the side of the road, the vehicle must ride over a step between the driveway entrance and the sidewalk. Therefore, the shock received by the vehicle is reduced if the suspension is softened. However, the step exists at the entrance to the parking lot, and therefore it is meaningless to control the suspension after the vehicle has entered the parking lot.

### SUMMARY OF THE INVENTION

Accordingly, it is an object of the invention to provide a suspension control apparatus for vehicles, which apparatus estimates the arrival of the vehicle at a particular location, determines a suspension control value for that particular location, and controls the suspensions based on the determined suspension control value so as to suitably control the suspension before the vehicle arrives at that particular location, thus solving the problem inherent in the above conventional suspension control apparatus.

Another object of the present invention is to provide a method for suspension control which method includes estimating the arrival of the vehicle at a particular location, determining a suspension control value for that particular location and controlling the wheel suspension units based on the determined suspension control value so as to suitably control the suspension before the vehicle arrives at that particular location.

To achieve the above objects, the present invention provides a suspension control apparatus for a vehicle including position detector means for detecting the present position of a vehicle, a navigational unit for producing particular location data, suspension units having controllable suspension characteristics associated with the wheels, and a control unit which estimates the arrival of the vehicle at the particular location and controls the suspension units in a manner appropriate for the particular location.

The "particular location" may be a roadside facility having a sidewalk across its entrance, a facility or a section of the road paved in a manner discouraging reckless driving and/or speeding, a toll gate, a narrow street, an intersection, a parking lot or a school. For such locations the control apparatus of the invention may control the suspension units so as to relax the shock which the vehicle receives at a particular location.

The suspension control apparatus of the invention may control the suspension units so as to increase the height of the vehicle when at a particular location such as a narrow street, an intersection, a parking lot or a school. Additionally or alternatively, the suspension control apparatus according to the invention may control the suspension units so as to decrease a difference in the height between the driver and a window of a toll booth or an operational unit of an automatic machine at a toll gate.

In another embodiment, the suspension control apparatus of the invention includes position detector means for detecting a present position of a vehicle, a navigational unit for producing road section data for a road section where a speed limit has been set, suspension units for controlling the suspension characteristics for the wheels, and a control unit which controls the suspension units so as to decrease the height of the vehicle when the vehicle is traveling at a speed exceeding a speed based on the set speed limit when the present position is on that section of the road for which the speed limit has been set.

The method of the present invention includes detecting the present position of the vehicle, retrieving data for a particular location for which suspension characteristics of the wheel suspension units are to be adjusted, estimating arrival of the vehicle at the particular location and controlling the suspension units in accordance with the values for suspension characteristics retrieved for that particular location.

In one embodiment of the suspension control method of the present invention, wheel suspension units are controlled by a method including storing, in a memory, values for suspension characteristics of the suspension units, in correlation with particular locations identified as requiring adjustment of the suspension characteristics; searching to determine a route to a destination; determining a present position of the vehicle on the determined route; determining an intent by the driver to enter a particular location based on at least the determined position and the proximity of the determined present position to the particular location; and in advance of entry into the particular location, adjusting the suspension characteristics of the suspension units in accordance with values for suspension characteristics correlated with the particular location.

### BRIEF DESCRIPTION OF THE DRAWINGS

Fig. 1 is a schematic view illustrating a concept of suspension control for a particular location according to the invention.

Fig. 2 is a block diagram of the suspension control apparatus according to a first embodiment of the invention.

Fig. 3 is a diagram illustrating a suspension suitable for use in conjunction with the invention.

Fig. 4 is a schematic view illustrating another concept of suspension control for a particular location according to the invention.

Fig. 5 is a table giving the order of priorities in suspension control for particular locations according to the invention.

Fig. 6 is a flowchart of a routine executed by a sensor unit according to the invention.

Fig. 7 is a flowchart of a routine executed by an embodiment of the suspension control apparatus of the invention.

Fig. 8 is a flowchart of a subroutine for control instruction preparation according to Step S 13 in Fig. 7.

Fig. 9 is a flowchart of subroutines for calculation of a particular location control value in Step S 13-1 of Fig. 8.

Fig. 10 is a flowchart of a subroutine for calculating a control value for suppressing shock at the time of driving into a particular location in Step S13-1-3 of Fig. 9.

Fig. 11 is a flowchart of a subroutine for calculation of a control value for suppressing shock from a pavement surface contoured, e.g., by ridges or speed bumps, to prevent reckless driving in Step S13-1-5 of Fig. 9.

Fig. 12 is a flowchart of a subroutine for calculation of a control value for effecting the auxiliary control for discouraging speeding in Step S13-1-7 of Fig. 9.

Fig. 13 is a flowchart of a subroutine for calculation of a control value for auxiliary control at a toll gate according to Step S13-1-9 in Fig. 9.

Fig. 14 is a flowchart of a subroutine for calculation of a control value for improving visibility on a narrow road in Step S13-1-11 of the routine illustrated in Fig. 9.

Fig. 15 is a flowchart of a subroutine for calculation of a control value for improving visibility at an intersection in Step S13-1-13 of the routine illustrated in Fig. 9.

Fig. 16 is a flowchart of a subroutine for calculation of a control value for improving visibility in a parking lot in Step S 13-1-15 of the routine illustrated in Fig. 9.

Fig. 17 is a flowchart illustrating a subroutine for calculation of a control value for improving visibility in the vicinity of a school in Step S13-1-17 of the routine illustrated in Fig. 9.

Fig. 18 is a flowchart of a routine executed by a suspension unit in accordance with the present invention.

### DESCRIPTION OF THE PREFERRD EMBODIMENTS

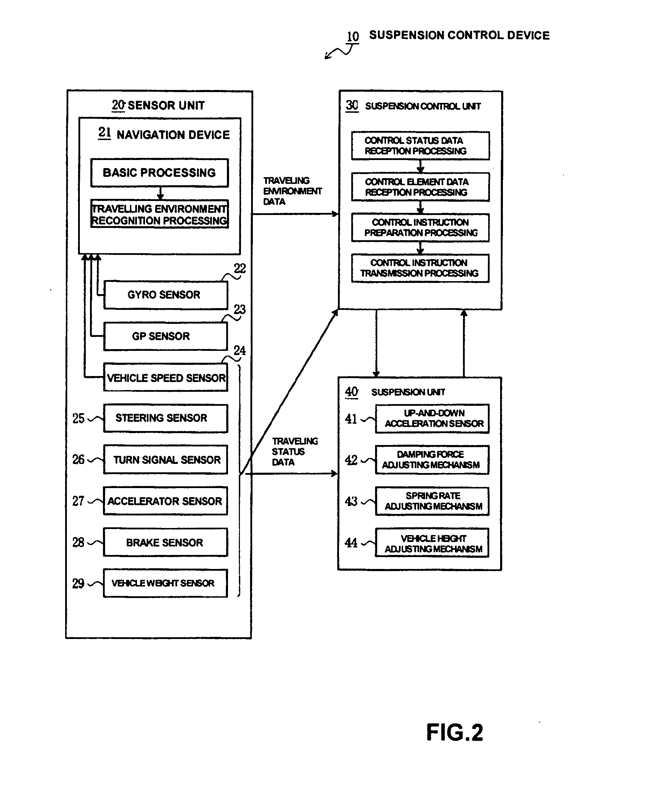

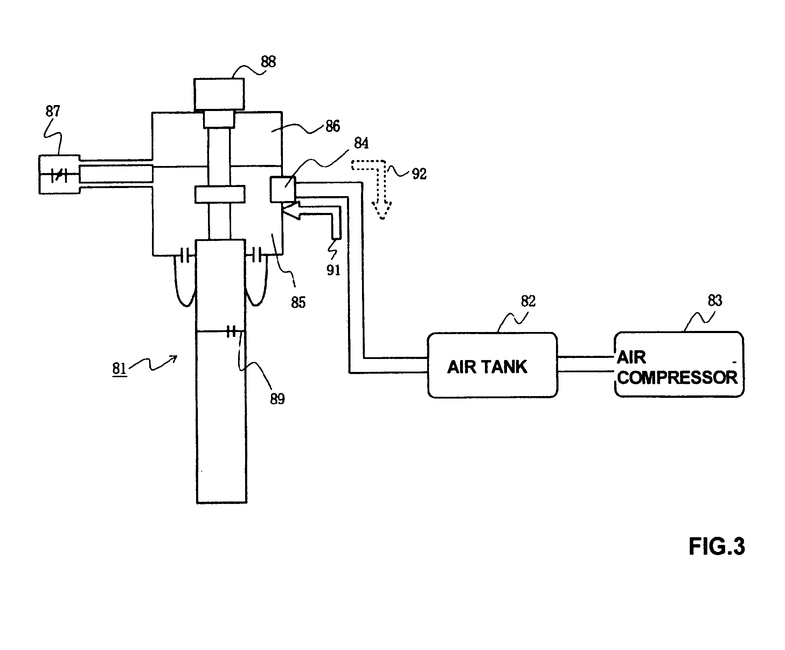

An embodiment of the invention will now be described in detail with reference to Figs. 2 and 3 of the drawings.

Fig. 2 shows a suspension control device 10 for a vehicle as including a sensor unit 20 for producing traveling environment data for a vehicle as road data, a suspension control unit 30 which is a control unit for controlling the suspension of a vehicle, and suspension units 40. The vehicle on which the suspension control device is installed may be of any kind of vehicle that travels on a road, such as a passenger car, a truck, a bus or a three-wheeler. For ease of description, the vehicle referred to in this embodiment is described as a passenger car having four wheels. Here, a suspension unit 40 is provided for each of the four wheels. Further, the suspension units 40 provided for the four wheels can be controlled independently of one another.

A navigation device 21 that serves here as a navigation unit, includes a gyro sensor 22 for detecting the rotational angular velocity or turning angle of the vehicle, a GPS (global positioning system) sensor 23, a vehicle speed sensor 24 for detecting the speed of the vehicle, a steering sensor 25 for detecting the steering angle of the vehicle, a turn signal sensor 26 for detecting the operation of a turn signal which is a direction indicator, an accelerator sensor 27 for detecting the degree of depression of the accelerator pedal operated by the driver (or degree of throttle opening), a brake sensor 28 for detecting the operation of the brake pedal, and a vehicle weight sensor 29 for obtaining data for weight of the vehicle.

Here, the navigation device 21 includes operation means such as a CPU or MPU, storage means such as semiconductor memory or magnetic disk, input means such as a touch panel, a remote controller or push button switch, display means such as a CRT or liquid crystal display, and a communication interface. Also connected for input to the navigation device 21 are the gyro sensor 22, the GPS sensor 23 and the vehicle speed sensor 24. The navigation device 21 may further include a terrestrial magnetism sensor, a distance sensor, a beacon sensor and an altimeter which are not shown. Based upon the signals from the gyro sensor 22, GPS sensor 23, vehicle speed sensor 24 as the vehicle speed detector means, terrestrial magnetism sensor, distance sensor, beacon sensor and altimeter, the navigation device 21 detects the present position of the vehicle, direction in which the vehicle is traveling, speed of the vehicle and the distance which the vehicle has traveled. In this embodiment, the navigation device 21 works as position detector means for detecting the present position of the vehicle, executes the basic routine and the traveling environment recognition routine, and transmits traveling environment data to the suspension control unit 30.

The GPS sensor 23 detects the present position by receiving electromagnetic (signals) from a GPS satellite (not shown), the terrestrial magnetism sensor detects the direction in which the vehicle is heading by measuring the terrestrial magnetism, and the distance sensor detects a distance between predetermined positions on the road. The distance sensor may be one that measures the number of revolutions of a wheel to determine the distance, or one that measures the acceleration and detects the distance by twice integrating the acceleration. The beacon sensor detects the present position by receiving position data from beacons disposed along the road.

The vehicle weight sensor 29 is connected to a LAN (local area network), obtains a vehicle code as data transmitted through the LAN in the vehicle, specifies the type of vehicle based on the vehicle code, and obtains the basic weight of the vehicle. The vehicle weight sensor 29 further includes seat sensors disposed in the individual seats, and calculates the loaded weight based on the number of passengers. The vehicle weight sensor 29 adds up the basic weight of the vehicle and the loaded weight to determine the vehicle weight as the total weight of the vehicle. Alternatively, it is possible to detect the loaded weight from the control of an automatic leveler while the vehicle is coming to a halt.

The storage means in the navigation device 21 includes a database comprising a map data file, an intersection data file, a node data file, a road data file, and a facility data file which contains data for facilities such as hotels and gas stations in different areas. In addition to the data for route searching, the storage means stores a variety of data for displaying, on the screen of the display means, a guide map of the route determined by search, distance to the next intersection, the direction of travel departing the next intersection, and any other guidance information. The storage means further stores various data for communication of information by voice. The storage means further includes storage media which may be any form, such as magnetic tape, magnetic disk, magnetic drum, flash memory, CD-ROM, MD, DVD-ROM, optical disk, MO, IC card, optical card, memory card or the like. It is also possible to use an external detachable storage medium.

The intersection data file stores intersection data, the node data file stores node data, and the road data file stores road data. The road conditions are displayed on the screen of the display means utilizing the intersection data, node data and road data. The intersection data includes the type of intersection, i.e., whether the intersection has a traffic signal. The node data constitute at least the position and shape of the road in the map data recorded in the map data file, and comprises data representing branch points (inclusive of intersections and T-junctions), nodal points and links coupling the nodes. Further, the nodal points include at least a cornering point on the road.

The road data includes data related to the width of the road, gradient, cant, altitude, bank, surface condition of the road, number of lanes of the road, point where the number of lanes decreases and a point where the width decreases. In the case of an expressway and trunk road, the lanes in the opposite direction are stored as separate road data, and are processed as for a double road. For example, a trunk road having two or more lanes on one side is processed as two roads, i.e., the lanes in one direction and the parallel lanes in the opposite direction are, respectively, stored in the road data as independent roads. For a corner the data includes radius of curvature, an intersection if any, a T-junction if any, approach to the comer, etc. For the road attributes, the data includes railroad crossings, ramps at entrances and exits of an expressway, toll gates, downhill, uphill, and classification of the road (national highway, principal local road, freeway, expressway, etc.).

The communication interface in the navigation device 21 provides communication with the suspension control unit 30, and exchanges various data with a FM transmitter, a telephone circuit network, an internet or a cell phone circuit network, and receives road data for traffic congestion, received by a data sensor (not shown), data related to traffic accidents, as well as a variety of data such as D-GPS data for detecting a detection error of the GPS sensor 23.

The navigation device 21 executes basic routines such as searching for a route to a destination, guidance along the route determined by the search, determining a particular section, and searching for points and facilities, displays a map on the screen of the display means, and displays, on the map, the present position of the vehicle, route from the present position to the destination, and guidance information for the route. Here, the guidance information may be produced as voice. The navigation device 21 further works as present position-specifying means for specifying the present position of the vehicle. The navigation device 21 further executes a traveling environment recognition routine for recognizing the traveling environment including the shape of a comer (inclusive of intersection, T-junction, ramps at the entrance and exit of an expressway, etc.) located in front of the vehicle on the route through which the vehicle is traveling, as well as recommended speed for turning the corner. The traveling environment data is transmitted to the suspension control unit 30.

The suspension control unit 30 includes operation means such as a CPU or MPU, storage means 35 such as a semiconductor memory or magnetic disk, and a communication interface. The suspension control unit 30 is connected to the vehicle speed sensor 24, steering sensor 25, turn signal sensor 26, accelerator sensor 27, brake sensor 28 and the vehicle weight sensor 29, and receives data related to the traveling conditions of the vehicle. The suspension control unit 30 executes a variety of routines such as a control state data reception routine, a control element data reception routine, a control instruction preparation routine, and control instruction transmission routine, and transmits the control instruction to the suspension units 40.

Each of the suspension units 40 possesses an up-and-down acceleration sensor 41, a damping adjusting mechanism 42, a spring rate adjusting mechanism 43 and a vehicle height adjusting mechanism 44, in addition to a spring, a damper and a wheel guide mechanism (link) that are usually present in a conventional suspension unit. Here, the up-and-down acceleration sensor 41 detects the acceleration of the vehicle in the vertical direction as the vertical acceleration of the spring load, which spring is the portion on the side of the car body in the suspension unit 40. The damping force adjusting mechanism 42 adjusts the damping force of the damper. When the damper is a hydraulic damper, the damping force adjusting mechanism 42 adjusts the damping force by adjusting the diameter of the orifice of the fluid passage. The spring rate adjusting mechanism 43 varies the value of the spring rate (spring constant or spring rate) by adjusting the rigidity of the spring or by adjusting the hardness of the spring. Further, the vehicle height adjusting mechanism 44 is capable of adjusting the height of the car body.
The suspension unit 40 transmits the control status data to the suspension control unit 30.

In the example illustrated in Fig. 2, the suspension control unit 30 is an independent (separate) unit. However, the functions of the suspension control unit 30 may be incorporated into the sensor unit 20 and the suspension units 40.

A method of adjusting the damping force, the spring rate and the height of the vehicle will be described here, presuming that the suspension unit 40 is an air suspension (air spring). The air suspension unit 81 is illustrated in Fig. 3. First, to adjust the damping force, the damping force adjusting mechanism 42 operates a damping force adjusting actuator 88. Then, a damp-varying valve 89 turns to vary the orifice diameter of the damper to thereby adjust the damping force.

When the spring rate is to be adjusted, the spring rate adjusting mechanism 43 also operates the switching valve 87. This opens or closes the passage between a main air chamber 85 and am air sub-chamber 86, or changes the effective diameter of the passage to adjust the spring rate. In the air suspension, the spring rate decreases in proportion to the volume of the air chamber. To increase the spring rate, therefore, the main air chamber 85 only is used. To lower the spring rate, the passage is opened to use the sub-air chamber 86 as well.

To adjust the height of the vehicle, the vehicle height adjusting mechanism 44 operates a solenoid valve 84. Then, the air is fed into the main air chamber 85 from an air tank 82, as indicated by an arrow 91, or the air is discharged from the main air chamber 85 as indicated by an arrow 92 to thereby adjust the air pressure in the main air chamber 85 in order to adjust the height of the vehicle. Air is fed into the air tank 82, as required, from an air compressor 83.

In this embodiment, the suspension control device 10 further includes: position detector means for detecting the present position of the vehicle, deceleration attempt detector means for detecting the driver's attempt to decelerate, route guide means for providing guidance along the route to the destination, turning direction detector means for detecting the turning direction of the vehicle, and vehicle speed detector means for detecting the vehicle speed. Here, a driver's attempt to decelerate is detected based on the motion of the brake pedal. The turning direction is determined by operation of the turn signal, by the steering angle of the steering wheel or by the turning angular velocity of the vehicle.

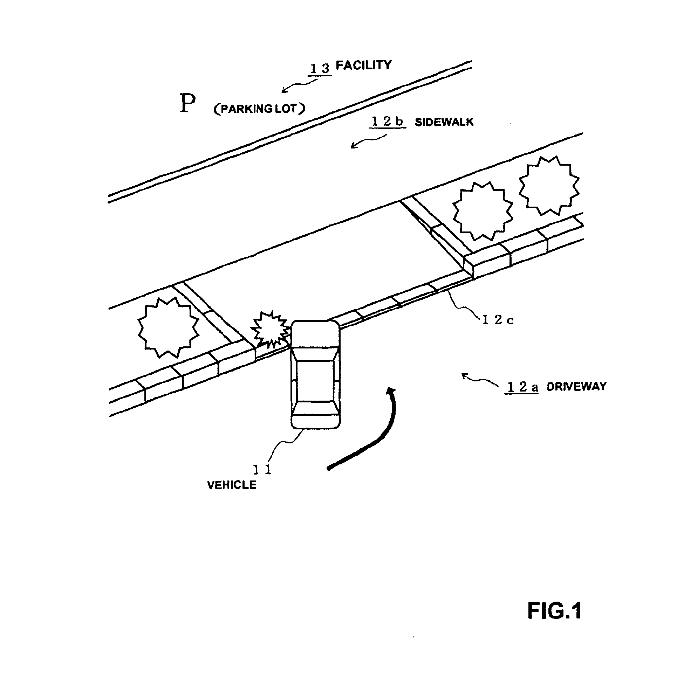

Control of the suspension for a particular location will now be explained with reference to Figs. 1, 4 and 5.

In this embodiment, the particular location is a location for which it is desired that the suspension be adjusted before the vehicle actually arrives at that location, and includes not only a location as a very restricted (small) area, such as an intersection, but also facilities including areas such as parking lots, narrow streets and sections of the road where a legal speed limit has been set. Thus, the "particular location" includes all of the places, regions and facilities where it is desired that the suspension be controlled in advance, irrespective of the size of the area and irrespective of whether it is roadside.

Next, described below are some examples of controlling the suspension to cope with some particular locations. In the first example shock is suppressed when the particular location is a roadside facility 13 that has a sidewalk 12b along the driveway 12a, as illustrated in Fig. 1, and when the vehicle is to be driven into the particular location. Here, the facility 13 may be any type of a commercial facility such as a convenience store or a supermarket, an eating facility such as a restaurant or a coffee shop, an amusement facility such as a game center or a movie theater, a public facility such as a municipal office, a gas station, or a parking facility such as a pay parking lot, and may further include land or a parking lot belonging to the facility.

In this case as illustrated in Fig. 1, there exists a sloped portion 12c between the driveway 12a and the sidewalk 12b. Therefore, the vehicle 11 that is traveling as indicated by the arrow receives a shock as it passes over the slope 12c in entering the facility 13 from the driveway 12a. When the difference in height at the slope portion 12c is great, further, the lower part of the vehicle 11 may come into contact with the sloped surface 12c. When the entrance of the vehicle 11 into the facility 13 is estimated, where the facility is a particular roadside location having a sidewalk 12b extending along the road 12a, the suspension control device 10 for the vehicle 11 of this embodiment controls, in advance, the characteristics of the suspension units 40 so as to adsorb the shock that is received while passing over the slope 12c and to prevent the lower part of the vehicle 11 from coming into contact with the slope 12c.

That is, when it is detected that the present position of the vehicle 11 is in the vicinity of the facility 13, that the vehicle speed is less than a predetermined value and that the turn signal is flashing for a direction indicating an intent to drive into the facility 13, the suspension control device 10 operates the vehicle height adjusting mechanisms 44 in the suspension units 40 to increase the height of the vehicle, operates the damping force adjusting mechanisms 42 to weaken the damping force, and operates the spring rate adjusting mechanisms 43 to lower the spring rate. Therefore, the height of the vehicle has been increased when the vehicle 11 passes over the slope 13c to go into the facility 13 from the driveway 12a and, accordingly, the lower part of the vehicle 11 does not come into contact with the slope 12c. Further, since the height of the vehicle has been increased, the driver is better able to see the surroundings and entrance into the facility 13 from the driveway 12a is facilitated. Moreover, since the damping force is weak and the spring rate is low, the vehicle 11 receives a reduced shock as it passes over the slope 12c.

A second example of suppressing shock is where the particular point is a facility such as a parking lot or a section of the road that has been so paved as to discourage reckless driving and/or excessive speed. Such measures for preventing reckless driving and/or excessive speed have a large degree of unevenness on the road surface. The vehicle 11 receives large shocks as it passes over such an uneven surface. Further, unevenness with a large difference in height (e.g. high speed bumps), creates the possibility that the lower part of the vehicle 11 may come into contact with the protrusions (speed bumps). When it is estimated that the vehicle 11 is approaching, e.g., a predetermined distance in advance of, the particular location of pavement for discouraging reckless driving and/or speeding, the suspension control device 10 for the vehicle 11 of this embodiment controls, in advance, the characteristics of the suspension units 40 so as to reduce the shock that is received while passing over the speed bumps or other unevenness and to prevent the lower part of the vehicle 11 from coming in contact with the bumps, raised portion or protrusions.

That is, when it is detected that the present position of the vehicle 11 is in the vicinity of the facility or the road section which is the particular location, i.e., that the vehicle speed is slower than a predetermined value or that the turn signal is flashing to indicate the direction to enter the facility or the road section, or when it is detected that the present location of the vehicle 11 is within the facility or the road section which is the particular location, the suspension control device 10 then operates the vehicle height adjusting mechanisms 44 in the suspension units 40 to increase the height of the vehicle, operates the damping force adjusting mechanisms 42 to weaken the damping force, and operates the spring rate adjusting mechanisms 43 to lower the spring rate. Therefore, the height of the vehicle has been increased when the vehicle 11 passes over the unevenness in the facility or the road section. Accordingly, the lower part of the vehicle 11 does not come into contact with the bump, protrusion or raised portion. Further, since the height of the vehicle has been increased, the driver can better view the surroundings. Moreover, since the damping force is weak and the spring rate is low, the vehicle 11 receives less shock as it passes over the unevenness (bump, raised portion or protrusion).

A third example involves reducing the vehicle speed when the particular location is a section of a road for which a speed limit has been set. In this case, the driver may not, in many cases, recognize that he is traveling at a speed far in excess of the speed limit. Therefore, when it is detected that the vehicle speed is exceeding the posted speed limit, the suspension control device 10 of this embodiment controls the characteristics of the suspension units 40 in a manner that the driver can better sense the excessive speed.

That is, when it is detected that the present position of the vehicle 11 is at or approaching (a predetermined distance in advance of) the particular location which, in this case, is in a section of road for which a speed limit has been set and that the vehicle speed is greatly in excess of that set (posted) speed limit, the suspension control device 10 operates the vehicle height adjusting mechanisms 44 in the suspension units 40 to decrease the height of the vehicle. Then, the eye level of the driver is lowered and the driver therefore feels as if the speed has increased and naturally reduces the speed. With the height being decreased, further, the stability of the vehicle 11 is improved.

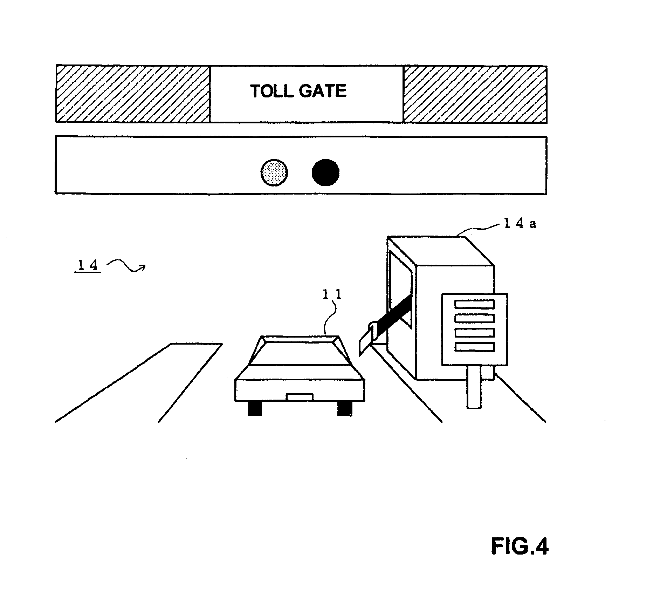

A fourth example involves the auxiliary control operation when the particular location is a toll gate 14 as illustrated in Fig. 4. At the toll gate 14, if the height of the vehicle 11 is too high or too low, a difference exists between the height of the driver and the height of the personnel at the window 14a of the toll gate, making it difficult to hand over the ticket or fee. When the toll gate 14 is an unmanned facility, the height of a ticket dispensing slot of an automatic machine or the height of the unit for fee deposit corresponds to the height of the personnel at the window 14a. Therefore, when entrance of the vehicle 11 into the toll gate 14 is estimated, the suspension control device 10 of the vehicle 11 of this embodiment controls, in advance, the characteristics of the suspension units 40 to so adjust the height of the vehicle that the driver will be on nearly the same level as the personnel at the window 14a of the toll gate or of the operational unit of the automatic machine.

That is, when it is detected that the toll gate 14 is a predetermined distance in front of the present position of the vehicle 11, the suspension control device 10 operates the vehicle height adjusting mechanisms 44 in the suspension units 40 to increase or decrease the height of the vehicle to establish a proper height. Then, the difference between the level of the driver and the level of the personnel at the window 14a of the toll gate, or the level of the operational unit of the automatic machine, decreases to allow the driver to easily hand over the ticket or the fee.

A fifth example provides improved the visibility on a narrow street, i.e., when the particular location is a narrow street. On a narrow street, in general, the visibility of the surroundings is low due to the presence of parked vehicles as well as the presence of buildings. Therefore, when the entrance of the vehicle 11 into a narrow street is estimated, the suspension control device 10 of this embodiment so controls the characteristics of the suspension unit 40 as to improve visibility.

That is, when it is detected that the present position of the vehicle 11 is in the vicinity of the narrow street which is the particular location, that the vehicle speed is slower than a predetermined value and/or that the turn signal is flashing to indicate an intention to enter the narrow street, or when it is detected that the present position of the vehicle 11 is on a narrow street, the suspension control device 10 then operates the vehicle height adjusting mechanisms 44 in the suspension units 40 to increase the height of the vehicle. Then, when the vehicle 11 travels through the narrow street, the height of the vehicle has been increased so that the driver has an improved view of the surroundings.

In a sixth example visibility is improved where the particular location is an intersection. At an intersection, in general, the visibility of the surroundings is poor due to vehicles in front and due to vegetation. When it is estimated that the vehicle 11 is entering or approaching (a predetermined distance from) the intersection, therefore, the suspension control device 10 in this embodiment controls the characteristics of the suspension units 40 so as to improve visibility.

That is, when it is detected that the present position of the vehicle 11 is approaching the intersection which is the particular location, that the vehicle speed is slower than a predetermined value and/or that the turn signal is flashing indicating an intention to turn to the right or the left, the suspension control device 10 then operates the vehicle height adjusting mechanisms 44 in the suspension units 40 to increase the height of the vehicle. Then, when the vehicle 11 is turning to the right or the left at the intersection, the height of the vehicle has been increased and the driver has an improved view of the surroundings.

In a seventh example, visibility is improved when the particular location is a parking lot. In a parking lot, in general, the visibility of the surroundings is poor due to the presence of parked vehicles. Besides, large bumps are often present, and the lower part of the vehicle 11 may often come into contact with the bumps or other protrusions. When estimated that the vehicle 11 is entering the parking lot, therefore, the suspension control device 10 of this embodiment controls the characteristics of the suspension units 40 so as to improve the visibility and to prevent the lower part of the vehicle 11 from coming into contact with the bumps or other protrusions.

That is, when it is detected that the present position of the vehicle 11 is in the vicinity of the parking lot which is the particular location, i.e., when the vehicle speed is slower than a predetermined value and/or the turn signal is flashing to indicate an intention to enter the parking lot, or when it is detected that the present position of the vehicle 11 is in the parking lot, the suspension control device 10 then operates the vehicle height adjusting mechanisms 44 in the suspension units 40 to increase the height of the vehicle. Accordingly, as the vehicle 11 is moving about the parking lot, the height of the vehicle has been increased and the driver has an improved view of the surroundings. Besides, the lower part of the vehicle 11 does not come into contact with the bumps or other protrusions.

In an eighth example visibility is improved in the vicinity of a school when the particular location is a kindergarten, a nursery school, a primary school, a junior high school or a senior high school. The vicinity of a school, in general, may have many young pedestrians and the driver of the vehicle 11 must pay attention. When it is estimated that the vehicle 11 is approaching a school, therefore, the suspension control device 10 of this embodiment controls the characteristics of the suspension units 40 so as to improve the visibility.

That is, when it is detected that the present position of the vehicle 11 is in the vicinity of a school, which is the "particular location" in this embodiment, and that the current time is within a range for student arrival at the school or a range for school dismissal, on a weekday, then, the suspension control device 10 operates the vehicle height adjusting mechanisms 44 in the suspension units 40 to increase the height of the vehicle. Accordingly, when the vehicle 11 travels near the school on a weekday and within a time period when students are arriving at or leaving school, the height of the vehicle has been increased and the driver has an improved view of the surroundings.

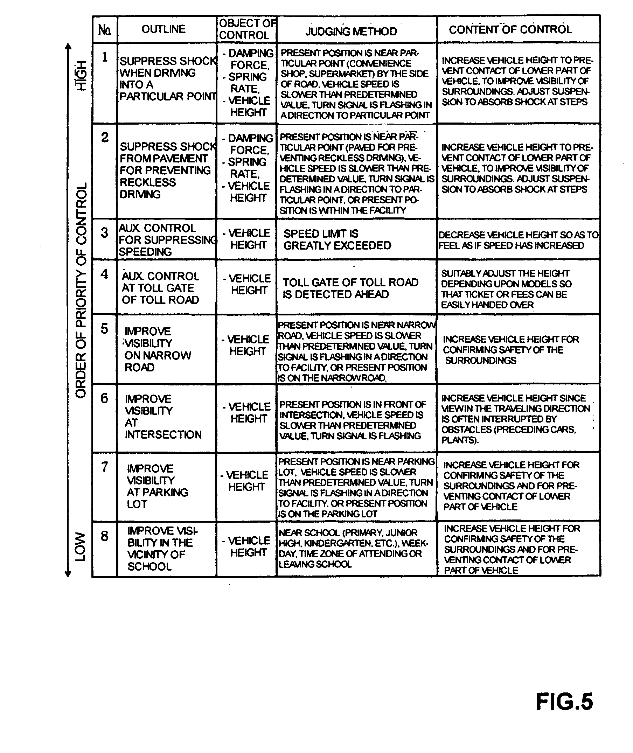

An order of priority is preferably incorporated into the suspension control described in the first to eighth embodiments above. The highest order of priority is the suppression of shock, the second highest order of priority is given to the auxiliary control and the third highest order of priority is given to improving visibility. Further, a higher order of priority is given to the ("particular locations") that most frequently occur or are encountered than to those encountered less frequently. As a result, the order of priority illustrated in Fig. 5 is given to the suspension control described in the above first to eighth embodiments. That is, the highest order of priority is given to the first example, the order gradually decreasing, and the lowest order of priority is given to the eighth example. The default order of priority (initial setting) is shown in Fig. 5, but it can be suitably changed by a driver of the vehicle 11.

Thus, the intent of a driver to enter a particular location may be based upon satisfaction of one or more sensed conditions such as depression of a brake pedal, activation of a turn signal indicating a turn in the direction of a particular location, a steering angle greater than a predetermined value, a turning angular velocity higher than a predetermined value, vehicle speed in excess of a predetermined speed, vehicle speed less than a predetermined speed, and/or a detected present position of the vehicle on a route determined by search and located in advance of a toll booth, a road section for which a speed limit has been set, or a road section having a surface contoured to inhibit reckless driving and/or speeding. The suspension characteristic adjusted by the control unit is at least one of height adjustment, dampening force and spring rate.

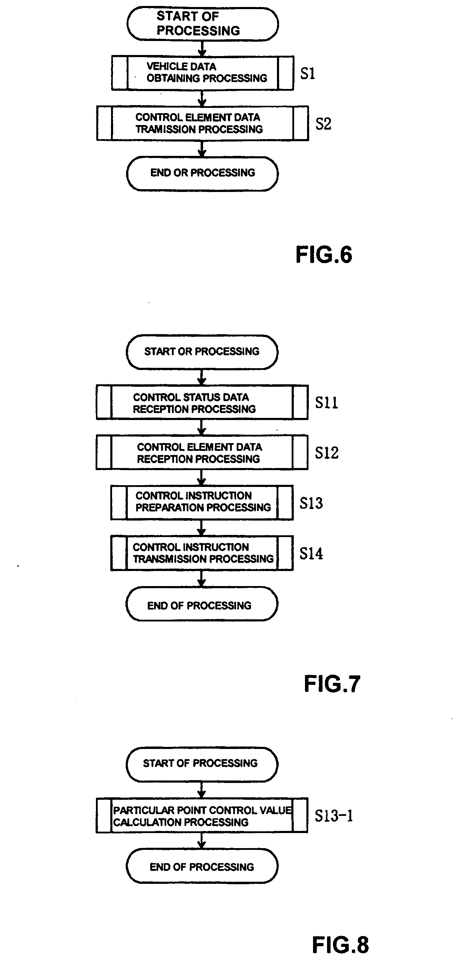

Next, described below are the routines executed by the suspension control device 10 of the vehicle 11, beginning with the routines executed by the sensor unit 20 as illustrated in Fig. 6.

As illustrated by the flow chart of Fig. 6, the sensor unit 20 first executes a routine for obtaining vehicle data. Here, the vehicle data thus obtained includes traveling environment data which, in turn, includes the vehicle data produced by the navigation apparatus 21, and traveling condition data produced by vehicle speed sensor 24, steering sensor 25, turn signal sensor 26, accelerator sensor 27, brake sensor 28 and vehicle weight sensor 29.

In this case, the navigation apparatus 21 executes basic processing for detection of the present position of the vehicle 11, for searching a route to a destination, for guidance of travel along the route determined by the searching, for determining the particular locations located on the determined routes, for retrieving data for those determined particular locations, for displaying a map on the screen of the display means, and for displaying, on the map, the present position of the vehicle, the route from the present position to the destination, and guidance information for guidance along the route. When it is judged in the basic processing that the vehicle 11 is approaching the vicinity of a particular location, based on the present position of the vehicle 11 and on the road data, the navigation apparatus 21 commences execution of the traveling environment recognition routine. The traveling environment recognition routine is for recognizing the type of the particular location and for retrieving the traveling environment data necessary for the suspension control to cope with the particular location.

Then, the sensor unit 20 executes a control element data transmission processing for transmitting the traveling environment data as the control element data and the traveling state data to the suspension control unit 30.

The routine executed by a sensor unit is shown in the flowchart of Fig. 6 as including:
Step 1: Execute the vehicle data obtaining processing; and
Step 2: Execute the control element data transmission processing to end the processing.

Next, the subroutine executed by the suspension control unit 30 will be described with reference to Fig. 7 which is a flowchart illustrating that subroutine.

First, the suspension control unit 30 executes a control status data reception subroutine for receiving control status data transmitted from the suspension units 40 (Step S 11). The suspension control unit 30, by execution of this subroutine, obtains acceleration of the spring load in the up-and-down direction produced by the up-and-down acceleration sensor 41, as well as the results of controls executed by the damping force adjusting mechanism 42, spring rate adjusting mechanism 43 and vehicle height adjusting mechanism 44.

Thereafter, the suspension control unit 30 executes a control element data reception subroutine for receiving control element data from the sensor unit 20 (Step S12). In execution of the subroutine of Step S12, the suspension control unit 30 obtains the traveling environment data as well as the traveling status data produced by the vehicle speed sensor 24, steering sensor 25, turn signal sensor 26, accelerator sensor 27, brake sensor 28 and vehicle weight sensor 29.

Next, the suspension control unit 30 executes a control instruction preparation subroutine for preparing an optimum control instruction from the traveling environment data which are the control element data, traveling status data and the result of the previous control cycle, and prepares an optimum control instruction for the suspension units 40 (Step S 13) and transmits the optimum control instruction to the suspension units 40 (Step S 14).

The control instruction transmission routine of Fig. 7 is summarized as follows:

Step S 11: Control status is obtained by execution of the control status data reception subroutine.

Step S12: Control element data is obtained by execution of the control element data reception subroutine.

Step S 13: A subroutine for control instruction preparation is executed.

Step S14: A control instruction to end the processing is transmitted.

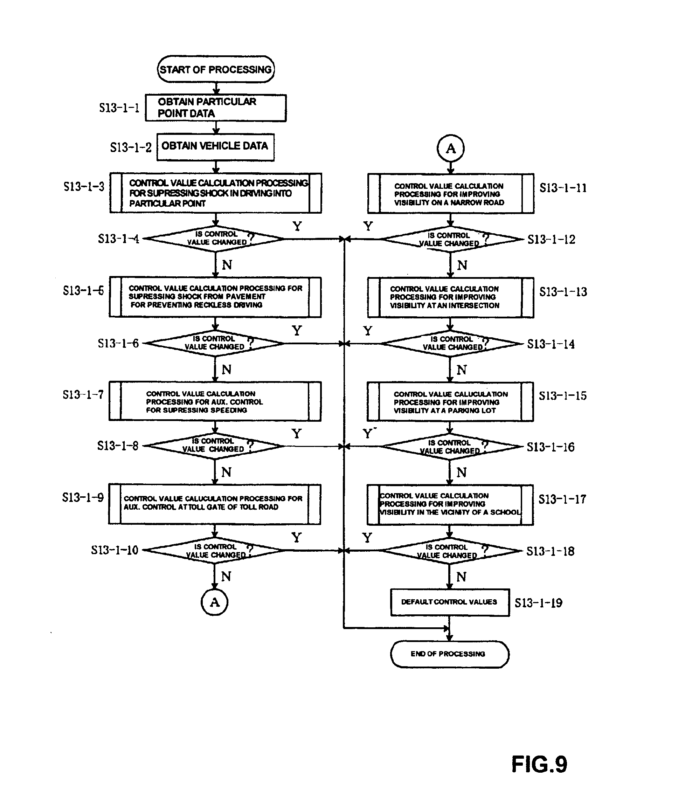

The subroutine for control instruction preparation in Step S 13 in Fig. 7 is illustrated by the flowchart of Fig. 8. When the control instruction preparation subroutine is to be executed, the suspension control unit 30 first estimates the entrance of the vehicle 11 into the particular location based on the control status data received from the suspension units 40 and on the control element data received from the sensor unit 20, and executes a subroutine for calculation of a particular location control value, i.e., an optimum suspension characteristic control value for the particular location included in the control instruction transmitted to the suspension units 40. Thus, in Step S13-1 the particular location control value is calculated, the subroutine of Step S13-1 being shown in detail in Fig. 9. This subroutine, illustrated by the flowchart of Fig. 9, for calculation of the particular location control value, is executed once every preset time period (e.g., every 100 ms) for updating the present position. That is, the suspension control unit 30 repeats the particular location control value calculation every time period in which the present position is updated.

The suspension control unit 30 first obtains particular location data, i.e., data related to the particular location near the present position of the vehicle 11 or in front of the vehicle 11 in the direction of travel, from the control element data received from the sensor unit 20 (Step S13-1-1). The suspension control unit 30 further obtains, from the control element data, the vehicle data output from the vehicle speed sensor 24, steering sensor 25, turn signal sensor 26, accelerator sensor 27, brake sensor 28 and vehicle weight sensor 29 (Step S 13-1-2).

Next, the suspension control unit 30 executes the control value calculation subroutine for suppressing the shock upon driving into a roadside facility (particular location) which is the first example illustrated in Fig. 1 and shown as highest priority in Fig. 5. In this case, the suspension control unit 30 judges whether the vehicle 11 is to be driven into the roadside facility 13 having a sidewalk 12b along the driveway 12a, and calculates a suspension control value (Step S13-1-3). The suspension control unit 30 judges whether the suspension control value has been changed, and ends the particular location control value calculation subroutine when the suspension control value has been changed (Step S13-1-4).

When the suspension control value has not been changed, the suspension control unit 30 executes the control value calculation subroutine for suppressing the shock from pavement designed to discourage reckless driving which is the "second example" (Step S13-1-5). In this case, the suspension control unit 30 judges whether the vehicle 11 is to enter a particular location which is a facility such as a parking lot or a section of the road paved for discouraging reckless driving and/or speeding, judges whether the present position of the vehicle 11 is within the particular location, and calculates a suspension control value. The suspension control unit 30 judges whether the suspension control value has been changed, and ends the particular location control value calculation subroutine when the suspension control value has been changed (Step S13-1-6).

When the suspension control value has not been changed, the suspension control unit 30 calculates a control value for effecting the auxiliary control for suppressing the speeding, which is the previously described third example (Step S13-1-7). In this case, the suspension control unit 30 judges whether the vehicle speed is in excess of the speed limit posted for the section of the road which is the particular location, i.e., judges whether the vehicle speed is greatly in excess of the speed limit, and calculates a suspension control value. The suspension control unit 30 judges whether the suspension control value has been changed, and ends the particular location control value calculation processing when the suspension control value has been changed (Step S13-1-8).

When the suspension control value has not been changed, the suspension control unit 30 calculates a control value for effecting the auxiliary control at a toll gate which is the previously described fourth example. In this case, the suspension control unit 30 judges whether there is a toll gate 14 within a predetermined distance ahead of the present location of the vehicle 11, and calculates a suspension control value (Step S13-1-9). The suspension control unit 30 judges whether the suspension control value has been changed, and ends the particular point control value calculation subroutine when the suspension control value has been changed (Step S13-1-10).

When the suspension control value has not been changed, the suspension control unit 30 calculates a control value for improving the visibility on a narrow street which is the previously described fifth example (Step S13-1-11). In this case, the suspension control unit 30 judges whether the vehicle 11 is about to enter the particular location which is a narrow street, judges whether the present position of the vehicle 11 is on the narrow street, and calculates a suspension control value. The suspension control unit 30 judges whether the suspension control value has been changed, and ends the particular location control value calculation subroutine when the suspension control value has been changed (Step S13-1-12).

When the suspension control value has not been changed, the suspension control unit 30 calculates a control value for improving the visibility at an intersection which has been previously described as the sixth example (Step S13-1-13). In this case, the suspension control unit 30 judges whether the vehicle 11 is about to enter an intersection which is the particular location and has signaled a turn to the right or the left, and calculates a suspension control value. The suspension control unit 30 judges whether the suspension control value has been changed, and ends the particular location control value calculation subroutine when the suspension control value has been changed (Step S13-1-14).

When the suspension control value has not been changed, the suspension control unit 30 calculates a control value for improving the visibility in the parking lot which is the previously described seventh example (Step S13-1-15). In this case, the suspension control unit 30 judges whether the vehicle 11 is going to enter the parking lot which is the particular location, judges whether the present position of the vehicle 11 is within the parking lot, and calculates a suspension control value. The suspension control unit 30 judges whether the suspension control value has been changed, and ends the particular location control value calculation processing when the suspension control value has been changed (Step S13-1-16).

When the suspension control value has not been changed, the suspension control unit 30 calculates a control value for improving the visibility in the vicinity of a school which is the previously described eighth example (Step S13-1-17). In this case, the suspension control unit 30 judges whether the vehicle 11 is in the vicinity of a school which is the particular location and whether the time is within a period for students arriving at or leaving the school on a weekday, and calculates a suspension control value. The suspension control unit 30 judges whether the suspension control value has been changed, and ends the particular location control value calculation subroutine when the suspension control value has been changed (Step S13-1-18).

When the suspension control value has not been changed, the suspension control unit 30 defaults (initializes) the suspension control value based on the assumption that the suspension control value was not changed in execution of the particular location control value calculation subroutine, and ends the particular location control value calculation subroutine (Step S13-1-19).

The flowchart of Fig. 9 can be summarized as follows:

Step S13-1-1: Particular location data is obtained.

Step S13-1-2: Vehicle data is obtained.

Step S13-1-3: A control value is calculated for suppressing the shock when driving into a particular location.

Step S13-1-4: The suspension control unit 30 judges whether the suspension control value has been changed. The routine ends when the suspension control value has been changed or proceeds to Step S13-1-5 when the suspension control value has not been changed.

Step S13-1-5: A control value is calculated for suppressing the shock from pavement designed to discourage reckless driving.

Step S13-1-6: The suspension control unit 30 judges whether the suspension control value has been changed. The subroutine ends when the suspension control value has been changed or proceeds to Step S 13-1-7 when the suspension control value has not been changed.

Step S 13-1-7: A control value is calculated for auxiliary control for suppressing speeding.

Step S 13-1-8: The suspension control unit 30 judges whether the suspension control value has been changed. The routine ends when the suspension control value has been changed or proceeds to Step S 13-1-9 when the suspension control value has not been changed.

Step S13-1-9: A control value is calculated for the auxiliary control at a toll gate.

Step S 13-1-10: The suspension control unit 30 judges whether the suspension control value has been changed. The routine ends when the suspension control value has been changed or proceeds to Step S13-1-11 when the suspension control value has not been changed.

Step S13-1-11: A control value is calculated for improving visibility on a narrow street.

Step S 13-1-12: The suspension control unit 30 judges whether the suspension control value has been changed. The routine ends when the suspension control value has been changed or proceeds to Step S 13-1-13 when the suspension control value has not been changed.

Step S13-1-13: A control value is calculated for improving the visibility at an intersection.

Step S13-1-14: The suspension control unit 30 judges whether the suspension control value has been changed. The routine ends when the suspension control value has been changed or proceeds to Step S 13-1-15 when the suspension control value has not been changed.

Step S13-1-15: Calculates a control value for improving visibility in a parking lot.

Step S 13-1-16: The suspension control unit 30 judges whether the suspension control value has been changed. The routine ends when the suspension control value has been changed or proceeds to Step S 13-1-17 when the suspension control value has not been changed.

Step S13-1-17: Calculates a control value for improving visibility in the vicinity of a school.

Step S13-1-18: The suspension control unit 30 judges whether the suspension control value has been changed. The routine ends when the suspension control value has been changed or proceeds to Step S13-1-19 when the suspension control value has not been changed.

Step S13-1-19: Defaults the suspension control value and ends the subroutine.

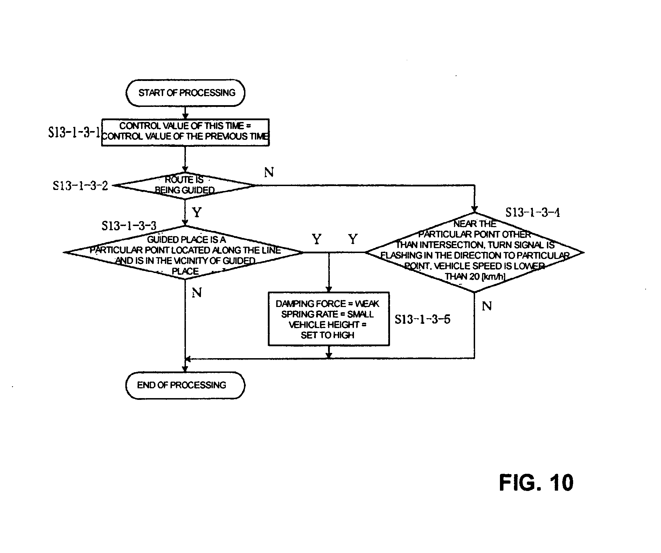

A subroutine for calculation of a control value for suppressing shock when driving into a particular location, (Step S13-1-3 in Fig. 9) will now be described with reference to Fig. 10 which is a flowchart illustrating the subroutine.

First, the suspension control unit 30 uses the suspension control value calculated in the previous cycle for updating the present position as the suspension control value in the currently executed routine for updating the present position (Step S13-1-3-1). Then, the suspension control unit 30 judges whether the route searched by the navigation device 21 is the subject of guidance, i.e., whether route guidance is being provided (Step S13-1-3-2).

When route guidance is being provided, the suspension control unit 30 judges whether a location which is a subject of guidance, such as the destination of the route or a stopping point en route to the destination, i.e., whether a guidance point is a facility 13 which is a particular roadside location that has a sidewalk 12b along the driveway 12a, and judges whether the present position of the vehicle 11 is in the vicinity of the facility 13. When the guide point is the facility 13 and the present position of the vehicle 11 is near the facility 13, the suspension control unit 30 sets a suspension control value that reduces the damping force, i.e., the spring rate is lowered and the height of the vehicle is raised, and ends the execution of the routine. When the guidance point is not the facility 13 or when the present position of the vehicle 11 is not in the vicinity of the facility 13, the suspension control unit 30 ends execution of the subroutine (Step S13-1-3-3).

On the other hand, when it is judged that the route is not being provided with guidance, the suspension control unit 30 judges whether the present position of the vehicle 11 is outside the intersection but is close to the facility 13, whether the vehicle speed is slower than a predetermined value (e.g., 20 km/h) and whether the turn signal is flashing in a manner indicating an intention to turn the vehicle into the facility 13 (Step S13-1-3-4). Alternatively, the suspension control unit 30 may judge whether the driver is decelerating instead of whether the vehicle speed is slower than a predetermined value. When it is detected that the present position of the vehicle 11 is outside the intersection but is close to the facility 13, that the vehicle speed is slower than the predetermined value, and that the turn signal is flashing in a manner indicating an intention to turn in a direction for entry into the facility 13, the suspension control unit 30 then sets the suspension control value so that the damping force is weakened, the spring rate is lowered and the height of the vehicle is increased, and ends execution of the subroutine (Step S 13-1-3-5). When it is determined that the present position of the vehicle 11 is not within the intersection, that the present position of the vehicle 11 is not in the vicinity of the facility 13, that the vehicle speed is not slower than a predetermined value or that the turn signal is not flashing in a direction in which the vehicle would be driven into the facility 13, the suspension control unit 30 ends the processing.

The flowchart of Fig. 10 may be summarized as follows:

Step S13-1-3-1: The suspension control value calculated in the previous control cycle is used as the suspension control value in the current control cycle.

Step S13-1-3-2: A judgement is made as to whether the route is the subject of guidance. The routine proceeds to Step S13-1-3-3 when guidance is provided for the route and proceeds to Step S13-1-3-4 when the route is not under guidance.

Step S 13-1-3-3: It is judged whether a guidance point is a particular location along the route and whether the present position is close to the guidance point. The routine proceeds to Step S13-1-3-5 when the guidance point is the particular location along the route and the vehicle is close to the guidance point, or the process is ended when the guidance point is not the particular location along the route or the vehicle is not close to the guidance point.

Step S 13-1-3-4: It is judged whether the present position of the vehicle 11 is outside the intersection but is in the vicinity of the particular location, whether the turn signal is flashing in a direction toward the particular location, and whether the vehicle speed is slower than a predetermined value (e.g., 20 km/h). The routine proceeds to Step S13-1-3-5 when the present position of the vehicle 11 is outside the intersection but is in the vicinity of the particular location, the turn signal is flashing in the direction toward the particular location, and the vehicle speed is slower than a predetermined value (e.g., 20 km/h), or the routine is ended when one or more of the foregoing conditions is not satisfied.

Step S13-1-3-5: The suspension control value is set so as to weaken the damping force, to lower the spring rate and to increase the height of the vehicle, and the routine is ended.

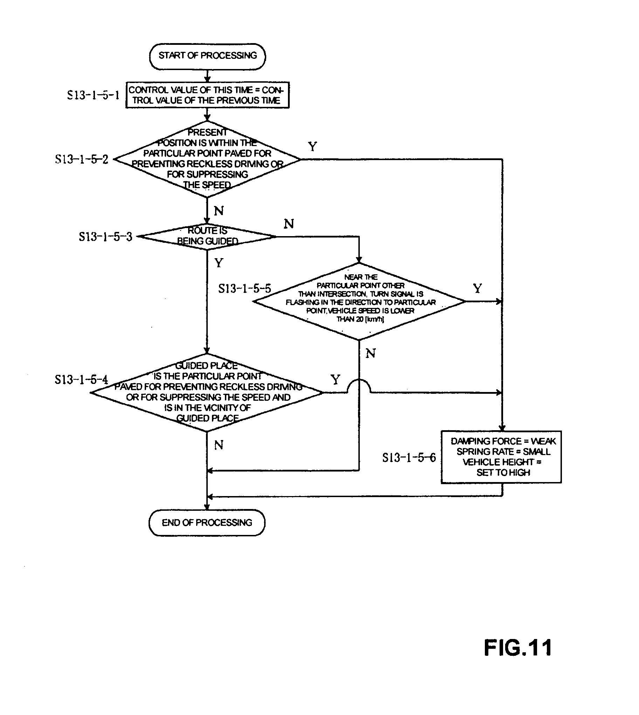

Next, described below is a subroutine, illustrated by the flowchart of Fig. 11, for calculating the control value for suppressing shock from pavement designed to prevent reckless driving in Step S 13-1-5 of Fig. 9.

In the subroutine of Fig. 11, the suspension control unit 30 uses the suspension control value calculated in the previous control cycle updating the present position as the suspension control value in the current control cycle for updating the present position (Step S 13-1-5-1). Then, the suspension control unit 30 judges whether the present position of the vehicle 11 is within the particular location such as a facility 13 like a parking lot or a section of the road that is paved to discourage reckless driving and/or speeding (Step S13-1-5-2). When the present position of the vehicle 11 is within the particular location that is so paved, the suspension control unit 30 sets the suspension control values so that the damping force is weakened, the spring rate is lowered and the height of the vehicle is increased, and ends execution of the subroutine (Step S 13-1-5-6).

When the present position of the vehicle 11 is not within the particular location (road section) that is paved for discouraging reckless driving and/or speeding, the suspension control unit 30 judges whether travel along the route is being guided (Step S13-1-5-3). When travel is being guided, the suspension control unit 30 judges whether a guidance point is the particular location that is paved for discouraging reckless driving or for suppressing the speed and whether the present position of the vehicle 11 is in the vicinity of the particular location (Step S13-1-5-4). Here, when the guidance point is the particular location and the present position of the vehicle 11 is in the vicinity thereof, the suspension control unit 30 sets the suspension control values so that the damping force is weakened, the spring rate is lowered and the height of the vehicle is increased, and ends execution of the subroutine (Step S13-1-5-6). Further, when the guidance point is not the particular location or when the present position of the vehicle 11 is not in its vicinity, the suspension control unit 30 ends execution of the subroutine.

When the travel along the route is judged as not being guided, on the other hand, the suspension control unit 30 judges whether the present position of the vehicle 11 is outside of the intersection and is close to the particular location, that the vehicle speed is slower than a predetermined value (e.g., 20 km/h) and that the turn signal is flashing in a direction toward the particular location (Step S13-1-5-5). Alternatively, the suspension control unit 30 may judge whether the driver is decelerating instead of whether the vehicle speed is slower than a predetermined value. When it is detected that the present position of the vehicle 11 is outside the intersection and is close to the particular location, that the vehicle speed is slower than the predetermined value, and that the turn signal is flashing in a direction toward entrance to the particular location, the suspension control unit 30 then sets the suspension control values so that the damping force is weakened, the spring rate is lowered and the height of the vehicle is increased, and ends the subroutine (Step S13-1-5-6). When it is determined that the present position of the vehicle 11 is not within the intersection, that the present position of the vehicle 11 is not in the vicinity of the particular location, that the vehicle speed is not slower than the predetermined value or that the turn signal is not flashing in a direction for entry into the particular location, the suspension control unit 30 then ends the subroutine.

The flowchart of Fig. 11 can be summarized as follows:

Step S 13-1-5-1: The suspension control value of the previous control cycle is used as the suspension control value in the current control cycle.

Step S 13-1-5-2: It is judged whether the present position of the vehicle 11 is within a particular location paved to prevent reckless driving and/or speeding. The routine proceeds to Step S 13-1-5-6 when the present position is within the particular location that is so paved and proceeds to Step S 13-1-5-3 when the present position is not within the particular location that is so paved.

Step S13-1-5-3: It is judged whether travel along the route is being guided. The routine proceeds to Step S13-1-5-4 when the travel is being guided and proceeds to Step S13-1-5-5 when the travel is not being guided.

Step S13-1-5-4: It is judged whether the guidance point is the particular location (road section) that is paved for discouraging reckless driving and/or speeding, and that the present position is in the vicinity of the guidance point. The routine proceeds to Step S13-1-5-6 when the guidance point is the particular location that is so paved and the vehicle is in the vicinity of the guidance point, or the execution of the routine is ended when the guidance point is not the particular location or the vehicle is not in the vicinity of the guidance point.

Step S13-1-5-5: It is judged whether the present position of the vehicle 11 is outside the intersection and is in the vicinity of the particular location, whether the turn signal is flashing in a direction toward the particular location, and whether the vehicle speed is slower than a predetermined value (e.g., 20 km/h). The routine proceeds to Step S13-1-5-6 when the present position of the vehicle 11 is outside the intersection and is in the vicinity of the particular location, when the turn signal is flashing in the direction toward the particular location, and when the vehicle speed is slower than the predetermined value (e.g., 20 km/h), or the subroutine is ended when one or more of these conditions is not satisfied.

Step S13-1-5-6: The suspension control values are so set as to weaken the damping force, to lower the spring rate and to increase the height of the vehicle, and the routine is ended.

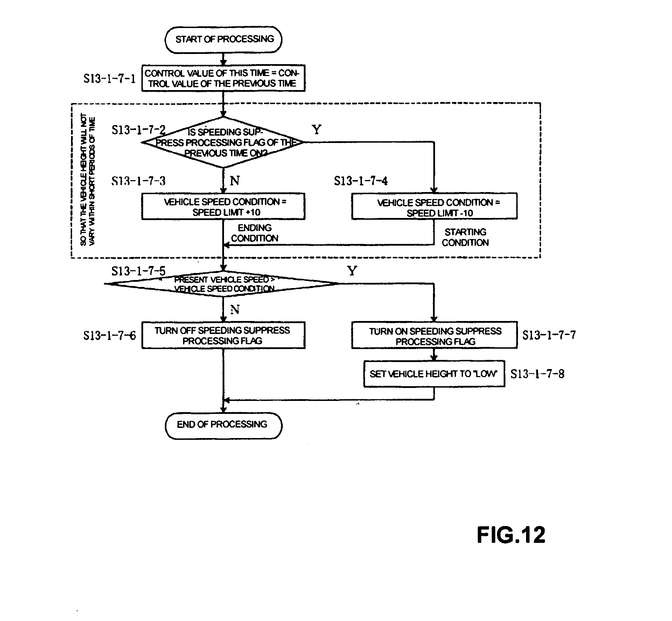

A subroutine for calculation of a control value for auxiliary control for suppressing speeding, i.e., Step S 13-1-7 in Fig. 9, is illustrated by the flowchart of Fig. 12.

In the first step of the subroutine of Fig. 12, the suspension control unit 30 uses the suspension control value calculated in the previous control cycle for updating the present position as the suspension control value in the current control cycle for updating the present position (Step S13-1-7-1).

The suspension control unit 30 judges whether a speeding suppression processing flag was turned on in the previous control cycle for updating the present position (Step S 13-1-7-2). The speeding suppression processing flag represents the setting of a suspension control value so as to increase the height of the vehicle in auxiliary control for inhibiting speeding. When the speeding suppression processing flag has not been turned on in the previous control cycle of updating the present position, the suspension control unit 30 sets, as a vehicle speed condition, a vehicle speed which is greatly in excess of the posted speed limit, e.g., sets a vehicle speed by adding, for example, 10 km/h to the speed limit (Step S13-1-7-3). When the speeding suppression processing flag has been turned on in the previous control cycle for updating the present position, the suspension control unit 30 sets, as a vehicle speed condition, a vehicle speed by subtracting, for example, 10 km/h from the posted speed limit (Step S13-1-7-4). Thus, the vehicle speed condition is changed depending upon whether the speeding suppression processing flag is turned on in the previous control cycle for updating the present position in order to impart hysteresis characteristics to the control start and ending conditions for the auxiliary control to prevent the height of the vehicle from being increased and decreased within short periods of time. The value of speed added to, or subtracted from, the speed limit can be changed depending upon the type of road or can be set by the driver.

Then, the suspension control unit 30 judges whether the current vehicle speed is in excess of the set vehicle speed condition (Step S13-1-7-5). When not in excess, the suspension control unit 30 turns the speeding suppression processing flag off to end the routine (Step S13-1-7-6). When the present vehicle speed is exceeding the vehicle speed condition, the suspension control unit 30 turns the speeding suppression processing flag on (Step S13-1-7-7), sets the suspension control value so as to decrease the height of the vehicle, and ends the routine (Step S13-1-7-8).

The flowchart of Fig. 12 may be summarized as follows:

Step S13-1-7-1: The suspension control value calculated in the previous control cycle is used as the suspension control value in the current control cycle.

Step S13-1-7-2: It is judged whether the speeding suppression processing flag was turned on in the previous control cycle for updating the present position. The routine proceeds to Step S13-1-7-4 when turned on and proceeds to Step S13-1-7-3 when not turned on.

Step S13-1-7-3: The vehicle speed condition is set by adding, for example, 10 km/h to the posted speed limit.

Step S13-1-7-4: The vehicle speed condition is set by subtracting, for example, 10 km/h from the speed limit.

Step S13-1-7-5: It is judged whether the present vehicle speed is in excess of the vehicle speed condition. The routine proceeds to Step S13-1-7-7 when the present vehicle speed is in excess of the vehicle speed condition and proceeds to Step S13-1-7-6 when the present vehicle speed is not in excess of the vehicle speed condition.

Step S13-1-7-6: The speeding suppression processing flag is turned off to end the routine.

Step S13-1-7-7: The speeding suppression processing flag is turned on.

Step S 13-1-7-8: The suspension control value is set so as to decrease the height of the vehicle, and the routine is ended.

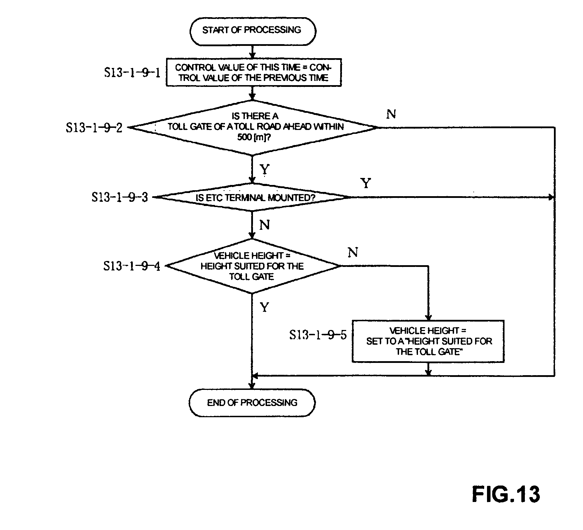

Next, the subroutine for calculation of a value for effecting auxiliary control at a toll gate (Step S13-1-9 in Fig. 9) will be described with reference to the flowchart of Fig. 13.

First, in Step S13-1-9-1, the suspension control unit 30 uses the suspension control value calculated in the previous control cycle (previous execution of the subroutine) for updating the present position as the suspension control value in the current control cycle for updating the present position. Then, in Step S 13-1-9-2 the suspension control unit 30 judges whether there is a toll gate 14 within a predetermined distance (e.g., 500 m) ahead of the present position of the vehicle 11. When the presence of the toll gate 14 is not detected, the suspension control unit 30 ends execution of the subroutine.

In Step S13-1-9-3, when the presence of the toll gate 14 is detected, the suspension control unit 30 judges whether the vehicle 11 is equipped with an ETC (electric toll collection system) terminal, e.g., transender such as "speedpass", etc.. When the vehicle 11 is equipped with an ETC terminal, the suspension control unit 30 ends the routine.

In Step S13-1-9-3, when the vehicle 11 is not equipped with an ETC terminal, the suspension control unit 30 judges whether the height of the vehicle is suited for the toll gate 14. Here, the height suited for the toll gate 14 is that height where the driver of the vehicle 11 is on nearly the same level as the height of a person at the window 14a of the toll gate 14 or of the operational unit of an automatic machine. When the height of the vehicle is suited for the toll gate 14, the suspension control unit 30 ends the routine. In Step S13-1-9-5, when the height of the vehicle is not suited for the toll gate 14, the suspension control unit 30 sets the suspension control value so that the height of the vehicle becomes suited for the toll gate 14, and ends the routine.

The flowchart of Fig. 13 may be summarized as follows:

Step S13-1-9-1: The suspension control value calculated in the previous control cycle is used as the suspension control value in the current control cycle.

Step S 13-1-9-2: It is judged whether there is a toll gate within a predetermined distance (e.g., 500 m) ahead of the present position of the vehicle 11. The routine proceeds to Step S 13-1-9-3 when there is a toll gate, or ends when there is no toll gate.

Step S13-1-9-3: It is judged whether the vehicle 11 is equipped with an ETC terminal. Execution of the routine is ended when the vehicle is equipped with an ETC terminal, or proceeds to Step S13-1-9-4 when the vehicle is not so equipped.

Step S 13-1-9-4: It is judged whether the height of the vehicle is suited for the toll gate 14. The routine ends when the height is suited for the toll gate 14, or the proceeds to Step S13-1-9-5 when the height is not suited for the toll gate 14.

Step S 13-1-9-5: The suspension control value is set so that the height of the vehicle is suited for the toll gate 14, and the routine ends.

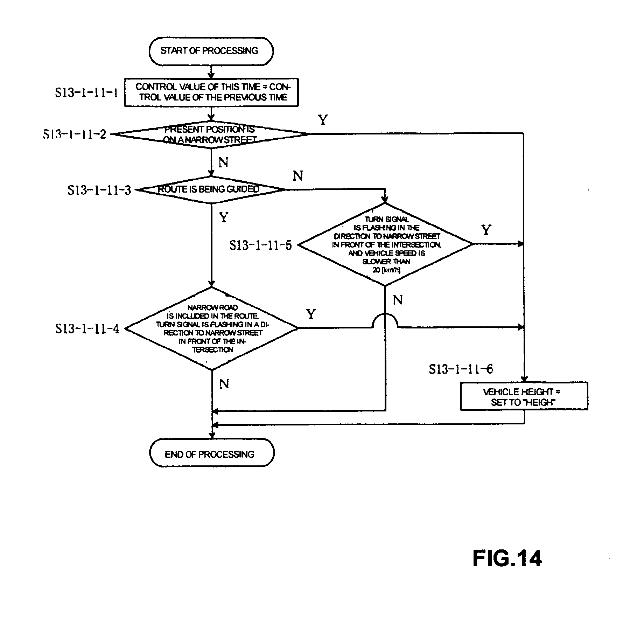

Next, described below is a subroutine for calculation of the control value for improving visibility on a narrow street (Step S13-1-11 in Fig. 9) with reference to Fig. 14 which is a flowchart illustrating the subroutine.

First, in Step S13-1-11-1, the suspension control unit 30 uses the suspension control value calculated in the previous control cycle for updating the present position as the suspension control value in the current control cycle updating the present position. Then, in Step S13-1-11-2, the suspension control unit 30 judges whether the present position of the vehicle 11 is on a narrow street. When the present position is on a narrow street, in Step S13-1-11-6 the suspension control unit 30 sets the suspension control value so as to increase the height of the vehicle, and ends the subroutine.

When the present position of the vehicle 11 is not on a narrow street, in Step S 13-1-11-3 the suspension control unit 30 judges whether guidance is being provided for the route. When travel is being guided, in Step S13-1-11-4 the suspension control unit 30 determines whether a narrow road section is included in the route determined by search, that the present position of the vehicle 11 is approaching an intersection in the narrow road section, and/or that a turn signal is flashing to indicate an intention to enter the narrow street section. Here, when the foregoing conditions are satisfied the routine goes to Step S13-1-11-6 where the suspension control unit 30 sets the suspension control value so as to increase the height of the vehicle, and ends execution of the routine. When it is not detected that the foregoing conditions are not satisfied, the suspension control unit 30 ends the execution of the routine.

On the other hand, when route guidance is not being provided in Step S13-1-11-5 the suspension control unit 30 judges whether the present position of the vehicle 11 is approaching the intersection on the narrow street, that the vehicle speed is slower than a predetermined value (e.g., 20 km/h) and that the turn signal is flashing in a direction indicating an intention to enter the narrow street. Alternatively, the suspension control unit 30 may judge whether the driver is decelerating instead of whether the vehicle speed is less than a predetermined value. When it is detected that the present position of the vehicle 11 is approaching the intersection on the narrow street, that the vehicle speed is slower than the predetermined value, and that the turn signal is flashing in a direction for entering the narrow street, then the routine goes to Step S13-1-11-6 and the suspension control unit 30 sets the suspension control value so as to increase the height of the vehicle, and ends execution of the routine. When it is determined that the foregoing conditions are not satisfied, the suspension control unit 30 ends the processing.

The flowchart of Fig. 14 may be summarized as follows:

Step S13-1-11-1: The suspension control value calculated in the previous control cycle is used as the suspension control value in the current cycle.

Step S13-1-11-2: It is judged whether the present position of the vehicle 11 is on a narrow street. The routine proceeds to Step S13-1-11-6 when the present position is on a narrow street and proceeds to Step S 13-1-11-3 when the present position is not on a narrow street.

Step S 13-1-11-3: It is judged whether travel is being guided. The routine proceeds to Step S13-1-11-4 when guidance is being provided and proceeds to Step S13-1-11-5 when guidance is not being provided.

Step S13-1-11-4: It is judged whether a narrow street section is included in the searched route, whether the present position is approaching an intersection of the narrow street and whether the turn signal is flashing in the direction of the narrow street. The routine proceeds to Step S13-1-11-6 when a narrow street section is included in the route, the present position is approaching an intersection on the narrow street and the turn signal is flashing in the direction of the narrow street, or the routine ends when a narrow street section is not included in the determined route, the present position is not ahead of an intersection on the narrow street section or the turn signal is not flashing in the direction of the narrow street.

Step S13-1-11-5: It is judged whether the present position of the vehicle 11 is approaching the intersection, the turn signal is flashing in the direction of the narrow road section, and the vehicle speed is slower than a predetermined value (e.g., 20 km/h). The routine proceeds to Step S 13-1-11-6 when the present position of the vehicle 11 is approaching such an intersection, the turn signal is flashing in the direction of the narrow street section, and the vehicle speed is slower than the predetermined value (e.g., 20 km/h), or the subroutine ends when the present position of the vehicle 11 is not approaching the intersection, the turn signal is not flashing in the direction of the narrow street, or the vehicle speed is not slower than the predetermined value (e.g., 20 km/h).

Step S13-1-11-6: The suspension control values are set so as to increase the height of the vehicle, and the processing ends.

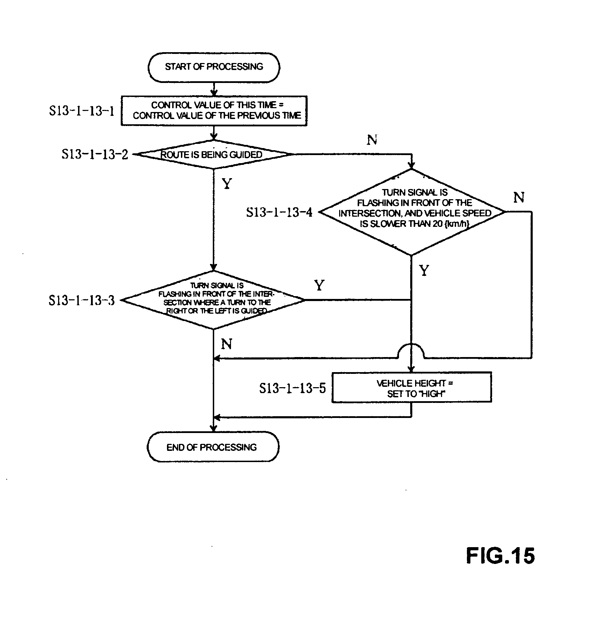

A subroutine for calculation of a control value for improving visibility at an intersection (Step S 13-1-13 in Fig. 9) will now be described with reference to Fig. 15 which is a flowchart illustrating the subroutine.

First, in Step S13-1-13-1 the suspension control unit 30 uses the suspension control value calculated in the previous control cycle for updating the present position as the suspension control value in the current control cycle for updating the present position. Then, the suspension control unit 30 judges whether the travel is being guided.

When travel guidance is being provided, in Step S13-1-13-2 the suspension control unit 30 judges whether the present position of the vehicle 11 is approaching an intersection where a turn to the right or the left is in accordance with the route guidance (travel guidance), and whether the turn signal is flashing to indicate an intention to turn to the right or the left. Here, when it is detected that the present position of the vehicle 11 is approaching the intersection where the guidance dictates a turn to the right or the left and that the turn signal is flashing to indicate an intention to turn to the right or the left, in Step S13-1-13-5 the suspension control unit 30 sets the suspension control value so as to increase the height of the vehicle, and ends the processing. On the other hand, when it is determined that the foregoing conditions are not satisfied, the suspension control unit 30 ends the routine.

On the other hand, when route guidance is not being provided, the routine goes to Step S 13-1-13-4 where the suspension control unit 30 judges whether the present position of the vehicle 11 is approaching the intersection, whether the vehicle speed is less than a predetermined value (e.g., 20 km/h) and whether the turn signal is flashing, indicating a turn to the right or the left. Alternatively, the suspension control unit may judge whether the driver is decelerating instead of whether the vehicle speed is less than a predetermined value. When it is determined that these conditions are satisfied, the routine goes to Step S13-1-13-5 where the suspension control unit 30 sets the suspension control value so as to increase the height of the vehicle, and ends the processing. On the other hand, when the conditions are not satisfied, the suspension control unit 30 directly ends the processing.

The flowchart of Fig. 15 is summarized as follows:

Step S13-1-13-1: The suspension control value calculated in the previous control cycle is used as the suspension control value in the current control cycle.

Step S 13-1-13-2: It is judged whether the route guidance is being provided. The routine proceeds to Step S13-1-13-3 when route guidance is provided and proceeds to Step S13-1-13-4 when route guidance is not being provided.

Step S 13-1-13-3: It is judged whether the present position of the vehicle 11 is approaching an intersection where guidance dictates a turn to the right or the left, and whether the turn signal is flashing to indicate a turn to the right or the left. The routine proceeds to Step S13-1-13-5 when these conditions are satisfied, or the processing ends when these conditions are not satisfied.

Step S13-1-13-4: It is judged whether the present position of the vehicle is approaching an intersection, whether the turn signal is flashing to indicate a turn to the right or the left, and whether the vehicle speed is less than the predetermined value (e.g., 20 km/h). The routine proceeds to Step S 13-1-13-5 when these conditions are satisfied, or the routine ends when these conditions are not satisfied.

Step S13-1-13-5: The suspension control value is set so as to increase the height of the vehicle, and the routine ends.

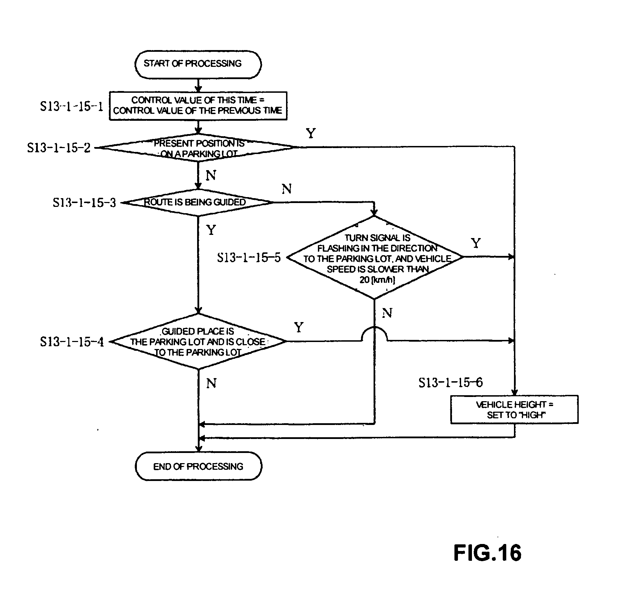

Next, a subroutine for calculation of a control value for improving visibility in a parking lot (Step S13-1-15 in Fig. 9) will be described with reference to Fig. 16 which is a flowchart illustrating the subroutine.

First, in Step S13-1-15-1 the suspension control unit 30 uses the suspension control value calculated in the previous control cycle executed to update the present position as the suspension control value in the current control cycle for updating the present position. Then, in Step S13-1-15-3 the suspension control unit 30 judges whether the present position of the vehicle 11 is in the parking lot. When the present position is in the parking lot, the suspension control unit 30 sets the suspension control value so as to increase the height of the vehicle, and ends the processing.

When the present position of the vehicle 11 is not in the parking lot, the routine goes to Step S13-1-15-5 where the suspension control unit 30 judges whether route guidance is being provided. When route guidance is being provided, the suspension control unit 30, in Step S13-1-15-4, judges whether the guidance point is on the parking lot and whether the present position of the vehicle 11 is in the vicinity of the parking lot. Here, when the guidance point is the parking lot and the present position of the vehicle 11 is in the vicinity of the parking lot, the routine goes to Step S13-1-15-6 where the suspension control unit 30 sets the suspension control value so as to increase the height of the vehicle, and ends the processing. When the guidance point is not on the parking lot or when the present position of the vehicle 11 is not in the vicinity of the parking lot, the suspension control unit 30 directly ends the routine.

On the other hand, when the control unit 30 judges that route guidance is not being provided, the routine goes to Step S13-1-15-5 where the suspension control unit 30 judges whether the present position of the vehicle 11 is in the vicinity of the parking lot, whether the vehicle speed is less than a predetermined value (e.g., 20 km/h) and whether the turn signal is flashing to indicate a direction for entering the parking lot. Alternatively, the suspension control unit may judge whether the driver is decelerating instead of whether the vehicle speed is less than a predetermined value. When it is determined that the present position of the vehicle 11 is in the vicinity of the parking lot, that the vehicle speed is less than the predetermined value, and that the turn signal is flashing to indicate an intention to turn into the parking lot, the suspension control unit 30 sets the suspension control value so as to increase the height of the vehicle, and ends the processing. When one or more of the foregoing conditions is not satisfied, the suspension control unit 30 ends the routine.

The flowchart of Fig. 16 is summarized as follows:

Step S13-1-15-1: The suspension control value calculated in the previous control cycle is used as the suspension control value in the current control cycle.

Step S13-1-15-2: It is judged whether the present position of the vehicle 11 is in the parking lot. The routine proceeds to Step S13-1-15-6 when the present position is in the parking lot and proceeds to Step S13-1-15-3 when the present position is not in the parking lot.

Step S13-1-15-3: It is judged whether route guidance is being provided. The routine proceeds to Step S13-1-15-4 when route guidance is provided and proceeds to Step S 13-1-15-5 when guidance is not provided.

Step S13-1-15-4: It is judged whether the guidance point is the parking lot and whether the present position of the vehicle 11 is in the vicinity of the parking lot. The routine proceeds to Step S13-1-15-6 when the guidance point is the parking lot and the present position of the vehicle 11 is in the vicinity of the parking lot, or the processing ends when these conditions are not both met.

Step S13-1-15-5: It is judged whether the present position of the vehicle 11 is in the vicinity of the parking lot, whether the turn signal is flashing in a direction indicating an intention to turn into the parking lot, and whether the vehicle speed is less than the predetermined value (e.g., 20 km/h). The routine proceeds to Step S 13-1-15-6 when all these conditions are satisfied, or the processing ends when one or more of these conditions is not satisfied.

Step S13-1-15-6: The suspension control value is set so as to increase the height of the vehicle, and the processing ends.

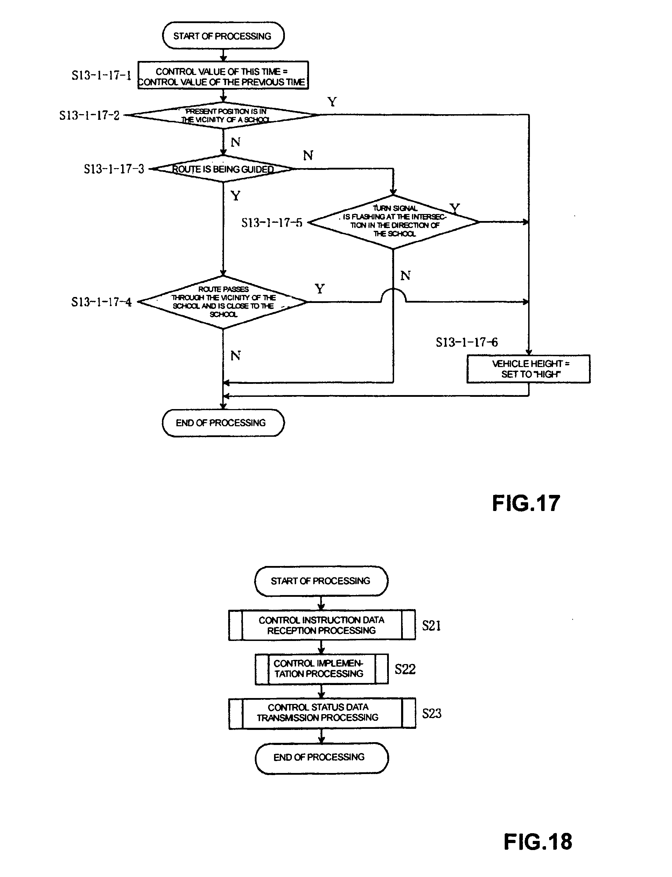

A subroutine for calculation of a control value for improving the visibility in the vicinity of a school (Step S 13-1-17 in Fig. 9) will now be described with reference to Fig. 17 which is a flowchart illustrating the subroutine.

In Step S13-1-17-1 the suspension control unit 30 uses the suspension control value calculated in the previous control cycle for updating the present position as the suspension control value in the current control cycle for updating the present position. Then, in Step S 13-1-17-2 the suspension control unit 30 judges whether the present position of the vehicle 11 is in the vicinity of the school. When the present position is in the vicinity of the school, the routine goes to Step S13-1-17-6 where the suspension control unit 30 sets the suspension control value so as to increase the height of the vehicle, and ends the processing.

When the present position of the vehicle 11 is not in the vicinity of the school, the routine goes to Step S 13-1-17-2 where the suspension control unit 30 judges whether route guidance is being provided. When route guidance is being provided, the suspension control unit 30, in Step S 13-1-17-4, judges whether the route passes through the vicinity of the school and whether the present position of the vehicle 11 is approaching the vicinity of the school. Here, when these two conditions are both satisfied, the routine goes to Step S 13-17-6 where the suspension control unit 30 sets the suspension control value so as to increase the height of the vehicle, and ends the processing. When one or both of these conditions is not satisfied, the suspension control unit 30 directly ends the processing.

On the other hand, when the suspension control unit 30 judges that route guidance is not being provided, the routine goes to Step S13-1-7-5 where the suspension control unit 30 judges whether the present position of the vehicle 11 is approaching the intersection and whether the turn signal is flashing to indicate a turn in the direction of entering the vicinity of the school. When it is detected that the present position of the vehicle 11 is approaching the intersection and that the turn signal is flashing to indicate a turn in the direction of entering the vicinity of the school, the suspension control unit 30 sets the suspension control value so as to increase the height of the vehicle, and ends the processing. Conversely, when one or both of these conditions is not satisfied the suspension control unit 30 ends the processing.

The suspension control value is set so as to increase the height of the vehicle only on weekdays and only in time periods during which students are arriving at or leaving school. Otherwise, the suspension control unit 30 does not change the suspension control value because of presence of the vehicle within a school zone.

The flowchart of Fig. 17 is summarized as follows:

Step S 13-1-17-1: The suspension control value calculated in the previous control cycle is used as the suspension control value in the current control cycle.

Step S 13-1-17-2: It is judged whether the present position of the vehicle 11 is in the vicinity of the school (or entering a posted school zone). The routine proceeds to Step S 13-1-17-6 when the present position is in the vicinity of the school and proceeds to Step S 13-1-17-3 when the present position is not in the vicinity of the school.

Step S13 -1-17-3: It is judged whether route guidance is being provided. The routine proceeds to Step S 13-1-17-4 when route guidance is being provided and proceeds to Step S13-1-17-5 when route guidance is not being provided.

Step S13-1-17-4: It is judged whether the route passes through the vicinity of the school (or posted school zone) and whether the present position of the vehicle 11 is approaching the vicinity of the school (or school zone). The routine proceeds to Step S 13-1-17-6 when the route passes through the vicinity of the school and the present position of the vehicle 11 is approaching the vicinity of the school, or the process ends when either or both of these conditions is not satisfied.

Step S 13-1-17-5: It is judged whether the present position of the vehicle 11 is approaching the intersection and whether the turn signal is flashing in a direction for entering the vicinity of the school. The routine proceeds to Step S13-1-17-6 when these conditions are satisfied, or the process ends when either of these conditions is not satisfied.

Step S13-1-17-6: The suspension control value is set so as to increase the height of the vehicle, and the process ends.

Next, the routine executed by the suspension unit 40 will be described with reference to Fig. 18 which is a flowchart illustrating the routine.

The suspension unit 40 first executes a control instruction data reception processing subroutine for receiving data related to a control instruction from the suspension control unit 30 (Step S21). Then, in Step S22, the suspension unit 40 executes a control implementation subroutine to effect the control according to a control instruction, to thereby operate the damping force adjusting mechanism 42, spring rate adjusting mechanism 43 and vehicle height adjusting mechanism 44. Then, in Step S23, the suspension unit 40 executes a control status data transmission subroutine for transmitting the control status data, inclusive of data based on signals from various sensors such as up-and-down acceleration sensor 41, and the like, to the suspension control unit 30.

The flowchart of Fig. 18 is summarized as follows.

Step S21: A subroutine for control instruction data reception is executed.

Step S22: The control implementation subroutine is executed.

Step S23: The control status data transmission subroutine is executed to end the processing.

In this embodiment as described above, the suspension control unit 30 estimates the arrival of the vehicle 11 at a particular location, determines the suspension control value to cope with certain conditions at that particular location, and operates the damping force adjusting mechanism 42, spring rate adjusting mechanism 43 and vehicle height adjusting mechanism 44 based on the determined suspension control value to thereby control the suspension. Before the vehicle 11 arrives at the particular location, therefore, the suspension has been suitably adjusted with respect to the damping force, spring rate and height of the vehicle.

When, for example, the particular location is a roadside facility 13 having a sidewalk 12b running along the road 12a and the vehicle 11 is about to enter the facility 13 from the driveway 12a, passing across a sloped portion 12c at the boundary between the driveway 12a and the sidewalk 12b, the lower part of the vehicle 11 does not come into contact with the slope 12c since the height of the vehicle has been increased. Further, the increased height of the vehicle offers the driver improved visibility of the surroundings, thus facilitating entry into the facility 13 from the driveway 12a. Moreover, since the damping force has been weakened and the spring rate has been lowered, the vehicle 11 receives less shock as it passes over the slope or step 12c.

When the particular location is a facility such as a parking lot or a section of a road paved to discourage reckless driving and/or speeding, the height of the vehicle is increased when the vehicle 11 passes over such unevenness in the facility or in the road section, and the lower part of the vehicle 11 does not come in contact with road surface protrusions. Further, the increased height of the vehicle offers the driver a better view of the surroundings. Moreover, since the damping force has been weakened and the spring rate has been lowered, the vehicle 11 receives less shock when it passes over such unevenness.

Further, when the particular location is a section of road for which a speed limit has been set, the height of the vehicle is lowered when the vehicle speed is greatly in excess of the speed limit. With the driver's eye level thus lowered, the driver senses that the speed has increased and naturally reduces speed. Moreover, the decreased height of the vehicle enhances the stability of the vehicle 11.

Further, when the particular location is a toll gate 14, the height of the vehicle is adjusted when it is estimated that the vehicle 11 is entering the toll gate 14. Therefore, any difference between the level (height) of the driver and the level of the personnel at the window 14a of the toll gate or the level of the operational unit of an automatic toll machine is eliminated so that the driver can easily hand over the ticket or fee.

When the particular location is a narrow street, the height of the vehicle is increased when it is estimated that the vehicle 11 is entering the narrow street, thereby offering the driver improved visibility of the surroundings.

When the particular location is an intersection, the height of the vehicle is increased when it is estimated that the vehicle 11 is entering the intersection, thereby offering the driver improved visibility of the surroundings.

When the particular location is a parking lot, the height of the vehicle is increased when it is estimated that the vehicle 11 is entering the parking lot, once again offering the driver improved visibility of the surroundings. Moreover, the lower part of the vehicle 11 does not come into contact with any step or surface protrusion which might be present.

When the particular location is a school, such as a kindergarten, a nursery school, a primary school, a junior high school or a senior high school, the height of the vehicle is increased when it is estimated that the vehicle 11 is approaching the school or school zone, thereby offering the driver improved visibility of the surroundings.

That the vehicle is approaching or in the vicinity of a particular location may be determined by the navigation system as a present location of the vehicle a predetermined distance from the particular location, which predetermined distance will change with the nature of the particular location. If the particular location is a school, the suspension control system of the present invention will start execution of the suspension control program, for example, 500 meters in advance of the location of the school. On the other hand, where the particular location is a restaurant or like facility, initiation of the suspension control program might be, for example, 50 meters in advance of that particular location.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges. or indications of groups of entities disclose every possible intermediate value or intermediate entity for the purpose of original disclosure as well as for the purpose of restricting the claimed invention, in particular as limits of value ranges.

## Claims

1. A suspension control apparatus for a wheeled vehicle comprising:
(a) position detector means for detecting a present position of the vehicle;
(b) a navigational unit for producing particular location data;
(c) suspension units respectively associated with the wheels of the vehicle and having selectively variable suspension characteristics; and
(d) a control unit which estimates in advance the arrival of the vehicle at the particular location, and which controls the suspension units so as to set the suspension characteristics to values associated with the particular location in advance of arrival of the vehicle at the particular location.

2. A suspension control apparatus according to claim 1, wherein the particular location is a facility located by the side of a road having a sidewalk along a driveway, a facility or a section of the road paved in a manner to inhibit reckless driving and/or speeding, a toll gate, a narrow street, an intersection, a parking lot or a school.

3. A suspension control apparatus according to claim 1 or 2, wherein the control unit controls the suspension units so as to reduce the shock which the vehicle receives in the particular location.

4. A suspension control apparatus according to any one of the preceding claims, wherein the control unit controls the suspension units so as to increase the height of the vehicle when the particular location is a narrow street, an intersection, a parking lot or a school.

5. A suspension control apparatus according to any one of the preceding claims, wherein the control unit controls the suspension units so as to decrease a difference in the height between a driver of the vehicle and a personnel at the window of a toll gate or an operational unit of an automatic machine when the particular location is the toll gate.

6. A suspension control apparatus for a wheeled vehicle comprising:
(a) position detector means for detecting a present position of the vehicle;
(b) a navigational unit for producing data for a section of a road for which a speed limit has been set;
(c) suspension units respectively associated with the wheels of the vehicle and having selectively variable suspension characteristics; and
(d) a control unit which controls the suspension units so as to decrease the height of the vehicle when the vehicle is traveling on the road section and at a speed exceeding a vehicle speed condition based on the set speed limit.

7. A suspension control apparatus according to any one of the preceding claims further comprising a memory containing values for the suspension characteristics correlated with the particular locations.

8. A suspension control apparatus according to claim 7 wherein said values for suspension characteristics are calculated by said control unit.

9. A suspension control method for control of suspension units respectively associated with wheels of a vehicle, said method comprising:
storing, in a memory, values for suspension characteristics of the suspension units in correlation with particular locations identified as requiring adjustment of the suspension characteristics;
searching to determine a route to a destination;
determining a present position of the vehicle on the route;
generating guidance instructions to assist a driver of the vehicle in following the determined route;
determining an intent by the driver to enter one of the particular locations, based on at least the determined present position; and
in advance of the intended entry of the vehicle into the one particular location, adjusting the suspension characteristics of the suspension units in accordance with values for suspension characteristics correlated with the one particular location.
